# EUROPÄISCHE PATENTSCHRIFT

(11) **EP 4 237 917 B1**
(45) Veröffentlichungstag und Bekanntmachung des Hinweises auf die Patenterteilung: **04.06.2025**
(21) Anmeldenummer: 22709211.1
(22) Anmeldetag: 04.02.2022
(51) Int. Cl.: H04N 7/00, G05B 19/042, G06Q 50/04, G05B 19/418, H04N 7/18

(54) **VERFAHREN UND VORRICHTUNG ZUR MASCHINENÜBERWACHUNG SOWIE COMPUTERPROGRAMMPRODUKT ZUR MASCHINENÜBERWACHUNG**
METHOD AND DEVICE FOR MACHINE MONITORING, AND COMPUTER PROGRAM PRODUCT FOR MACHINE MONITORING
PROCÉDÉ ET DISPOSITIF DE SURVEILLANCE DE MACHINES ET PRODUIT-PROGRAMME INFORMATIQUE POUR LA SURVEILLANCE DE MACHINES

(30) Priorität: 10.02.2021 DE 102021103102
(43) Veröffentlichungstag der Anmeldung: 06.09.2023
(73) Patentinhaber: Pandia GmbH, 8750 Glarus (CH)
(72) Erfinder: NART, Mauro, 8750 Glarus (CH); NART, Jonas, 8750 Glarus (CH)
(74) Vertreter: Klickow & Wetzel PartGmbB
(86) Internationale Anmeldenummer: PCT/EP2022/052670
(87) Internationale Veröffentlichungsnummer: WO 2022/171531

(56) Entgegenhaltungen:
- WO-A1-2005/027068
- US-A1- 2009 251 601
- US-A1- 2014 055 612
- US-A1- 2015 213 838
- US-A1- 2020 336 659

## Beschreibung

Die Erfindung betrifft eine Vorrichtung zur Maschinenüberwachung im Sinne einer Vorrichtung zur Erfassung und Auswertung von Sensordaten, insbesondere von Bilddaten, zur Überwachung von Maschinen und Anlagen und mit diesen Maschinen oder Anlagen ausgeführten Prozessen.

Darüber hinaus betrifft die Erfindung ein Verfahren zur Maschinenüberwachung im Sinne eines Verfahrens zur Erfassung und Auswertung von Sensordaten, insbesondere von Bilddaten, zur Überwachung von Maschinen und Anlagen und mit diesen Maschinen oder Anlagen ausgeführten Prozessen.

Weiterhin betrifft die Erfindung ein Computerprogrammprodukt zur Maschinenüberwachung, das auf einer geeigneten Hardware installiert der Erfassung und Auswertung von Sensordaten, insbesondere von Bilddaten, zur Überwachung von Maschinen und Anlagen und mit diesen Maschinen oder Anlagen ausgeführten Prozessen dient.

Produktions- und Bearbeitungsmaschinen oder -anlagen sind heutzutage in der Regel hochautomatisiert. Auf häufig großen und unübersichtlichen Anlagen laufen komplexe und schnelle mechanische Prozesse ab. Insbesondere bei der Inbetriebnahme, nach Umrüstungen oder durch wechselnde Produktionsparameter können Fehlfunktionen solcher Maschinen oder Anlagen auftreten, die zu fehlerhaften Produkten oder Beschädigungen der Maschinen oder Anlagen selbst führen können.

Bei Fehlfunktionen von Maschinen oder Anlagen bzw. mit diesen Maschinen oder Anlagen ausgeführten Prozessen sind dementsprechend häufig komplexe und schwer einsehbare Maschinenvorgänge involviert. Darüber hinaus können Prozesse bzw. einzelne Prozessschritte zu schnell sein bzw. zu schnell ablaufen, um diese mit dem menschlichen Auge wahrnehmen zu können.

Daher werden zur Maschinenüberwachung automatisierte Vorrichtungen und Verfahren eingesetzt, die mit technischen Mitteln die notwendigen Voraussetzungen für eine effektive Überwachung schaffen.

Es sind bereits entsprechende Vorrichtungen und Verfahren bekannt, die zur Überwachung von Maschinen und Anlagen bzw. den mit diesen ausgeführten Prozessen Kameras aufweisen, sodass mithilfe der von den Kameras erfassten Bilddaten eine Überwachung erfolgen kann. Diese Überwachung dient beispielsweise der Erkennung von mit den Maschinen oder Anlagen hergestellten fehlerhaften Produkten. Die Auswertung der mithilfe der Kameras erfassten Bilder bzw. aus mehreren Bildern bestehenden Videosequenzen erlaubt Rückschlüsse auf beispielsweise fehlerhaft eingestellte Prozessparameter und sonstige Fehlerquellen im Betrieb der Maschinen und Anlagen sowie mit diesen Maschinen oder Anlagen ausgeführten Prozessen.

Bei der kontinuierlichen Überwachung von Maschinen, Anlagen und den mit diesen Maschinen oder Anlagen ausgeführten Prozessen fällt eine große Menge an Daten an, die gespeichert und zur Erkennung und Behebung von Fehlern ausgewertet werden muss. Insbesondere bei hochaufgelösten Bilddaten, die mit schnellen Kameras aufgenommen werden, sind für die Speicherung dieser Datenmengen große Speichereinrichtungen erforderlich. Häufig treten Fehlfunktionen jedoch nur sporadisch auf, sodass zunächst große Datenmengen ausgewertet werden müssen, um überhaupt den relevanten Zeitbereich in den Bilddaten zu finden.

Weiterhin sind die mit bekannten Vorrichtungen und Verfahren zur Maschinenüberwachung erfassten Daten meist nur lokal verfügbar, sodass Experten die Daten vor Ort auswerten müssen, um die Fehler erkennen und beheben zu können.

Aus dem Dokument US 2020/336659 A1 ist ein Überwachungssystem mit über ein Netzwerk verbundenen Kameras bekannt, wobei der Ausfall einer Master-Kamera die Übertragung von Bildsequenzen einer anderen Kamera des Überwachungssystems triggert.

Das Dokument US 2015/213838 A1 offenbart ein netzwerkbasiertes System zur Überwachung von Maschinen mithilfe von Kameras. Die Bilddaten der Kameras werden in einem Ringspeicher zwischengespeichert. Die Detektion einer Maschinenstörung generiert ein TriggerSignal, das zum Abruf und Senden der im Ringspeicher gespeicherten Videosequenzen an einen Daten-Server führt, sodass die Menge der im Fehlerfall auszuwertenden Daten reduzierbar ist. Darüber hinaus erfolgt eine Synchronisierung der Fehler-Clock mit den Bilddaten.

Die aus dem Stand der Technik bekannten Vorrichtungen und Verfahren zur Maschinenüberwachung weisen demnach diverse Nachteile auf, die die vorliegende Erfindung beheben soll.

Eine Aufgabe der Erfindung ist es daher, eine verbesserte Vorrichtung zur Maschinenüberwachung zu schaffen.

Eine weitere Aufgabe der Erfindung ist es, eine Vorrichtung zur Maschinenüberwachung zu schaffen, die die auszuwertende Datenmenge automatisiert auf mindestens einen relevanten Zeitbereich reduziert.

Diese Aufgaben werden erfindungsgemäß durch eine Vorrichtung zur Maschinenüberwachung gemäß Patentanspruch 1 gelöst.

Eine weitere Aufgabe der Erfindung ist es, ein verbessertes Verfahren zur Maschinenüberwachung zu schaffen.

Diese Aufgabe wird erfindungsgemäß durch ein Verfahren zur Maschinenüberwachung gemäß Patentanspruch 6 gelöst.

Eine weitere Aufgabe der Erfindung ist es, ein Computerprogrammprodukt zur Maschinenüberwachung zu schaffen, das die vorgenannten Probleme löst.

Diese Aufgabe wird erfindungsgemäß durch ein Computerprogrammprodukt zur Maschinenüberwachung gemäß Patentanspruch 14 gelöst.

Die im folgenden offenbarten Merkmale einer Vorrichtung zur Maschinenüberwachung sind sowohl einzeln als auch in allen ausführbaren Kombinationen Bestandteil der Erfindung.

Eine erfindungsgemäße Vorrichtung zur Maschinenüberwachung weist zumindest eine Kamera und eine Steuereinheit sowie eine Auswerteeinheit oder mindestens eine Steuer- und Auswerteeinheit auf.

Die mindestens eine Kamera dient zur Erfassung von Bilddaten. Der erfassbare Bildausschnitt der Kamera ist dabei an die zu überwachende Maschine oder Anlage bzw. den mit der jeweiligen Maschine oder Anlage ausgeführten Prozess angepasst. Somit ist eine gezielte Überwachung eines bestimmten Maschinenbereichs realisierbar.

Vorzugsweise weist die mindestens eine Kamera eine Bildauflösung von mindestens 1280 x 720 Pixeln und eine Bilderfassungsrate von etwa 25 BpS (Bilder pro Sekunde) bis mindestens 240 BpS auf. Es sind jedoch auch Hochgeschwindigkeitskameras mit Bilderfassungsraten von etwa 1000 BpS verwendbar.

In einer bevorzugten Ausführungsform weist die mindestens eine Kamera eine Bildauflösung von mindestens 1280 x 720 Pixeln und eine Bilderfassungsrate von mindestens 30 BpS auf. Eine höhere zeitliche Auflösung ermöglicht die Auswertung schneller ablaufender Prozesse.

In einer weiteren bevorzugten Ausführungsform der Erfindung weist die mindestens eine Kamera eine Bildauflösung von mindestens 1920 x 1080 Pixeln auf. Eine höhere Auflösung ermöglicht eine detailliertere Auswertung der erfassten Bilder, erfordert jedoch mehr Kapazitäten für Auswertung und Speicherung der Bilder.

Es ist vorteilhaft, eine Bilderfassungsrate zu verwenden, die gerade ausreicht, um die relevanten Prozesse hinreichend aufzulösen, um so die zu speichernde und zu analysierende Datenmenge auf das Notwendige zu begrenzen.

In einer vorteilhaften Ausführungsform weist eine erfindungsgemäße Vorrichtung zur Maschinenüberwachung eine Mehrzahl von Kameras auf. Beispielsweise weist eine erfindungsgemäße Vorrichtung zur Maschinenüberwachung 2, 3 oder 4 Kameras auf.

Die Verwendung mehrerer Kameras ermöglich die zeitgleiche Überwachung verschiedener Maschinenbereiche. Dadurch können örtlich an verschiedenen Orten einer Maschine ablaufende Prozessschritte zeitgleich überwacht und auf etwaige Kausalitäten hin untersucht werden.

Die Verwendung von 2, 3 oder 4 Kameras hat sich in der Praxis für die meisten Anwendungen als optimal erwiesen.

Die mindestens eine Kamera ist zum Austausch von Daten und vorzugsweise zur Ansteuerung der mindestens einen Kamera mit der Steuereinheit verbunden.

Diese Verbindung ist mithilfe eines Netzwerkmoduls der Vorrichtung zur Maschinenüberwachung realisiert.

Besonders bevorzugt ist das Netzwerkmodul zur Herstellung einer kabellosen Verbindung zur mindestens einen Kamera ausgebildet.

In einer Ausführungsform der Erfindung ist die mindestens eine Kamera mithilfe einer WLAN-Verbindung mit der Steuereinheit der Vorrichtung zur Maschinenüberwachung verbunden.

Weiterhin weist die Vorrichtung zur Maschinenüberwachung mindestens eine Speichereinheit zur Speicherung der erfassten Daten auf. Beispielsweise ist die Speichereinheit als eine Festplatte ausgebildet.

In Ausführungsformen der Erfindung sind die Auswerteeinheit, die Steuereinheit und die mindestens eine Speichereinheit in ein gemeinsames Gehäuse integriert, während die mindestens eine Kamera unabhängig von diesen an der zu überwachenden Maschine oder Anlage positionierbar ist. Das Netzwerkmodul ist als separates Modul mit der Steuer- und der Auswerteeinheit verbunden.

In anderen Ausführungsformen der Erfindung sind die Auswerteeinheit, die Steuereinheit, die mindestens eine Speichereinheit und das Netzwerkmodul in ein gemeinsames Gehäuse integriert, während die mindestens eine Kamera unabhängig von diesen an der zu überwachenden Maschine oder Anlage positionierbar ist.

In weiteren Ausführungsformen der Erfindung weist diese eine erste und eine zweite Auswerteeinheit auf, wobei mindestens eine der Auswerteeinheiten nicht mit der Steuereinheit in ein gemeinsames Gehäuse integriert ist.

Die in ein gemeinsames Gehäuse integrierten Komponenten bilden die Zentraleinheit und die mindestens eine Kamera und ggf. zusätzliche Sensoren bilden die Satelliten. Die Zentraleinheit umfasst zumindest die Auswerteeinheit, die Steuereinheit oder die Steuer- und Auswerteeinheit und die mindestens eine Speichereinheit.

Vorzugsweise weist die erfindungsgemäße Vorrichtung zur Maschinenüberwachung mindestens ein Display auf, über das die erfassten Daten an einen Benutzer ausgebbar sind. Dadurch kann eine Auswertung der Daten unmittelbar vor Ort erfolgen.

Beispielsweise ist das Display in die Zentraleinheit einer erfindungsgemäßen Vorrichtung zur Maschinenüberwachung integriert.

Sofern die Vorrichtung zur Maschinenüberwachung kein integriertes Display aufweist, ist in Ausführungsformen der Erfindung mindestens ein externes Display an die Vorrichtung zur Maschinenüberwachung anschließbar bzw. über ein lokales Netzwerk mit dieser verbindbar.

Es ist jedoch erfindungsgemäß ebenso möglich, kein Display an der Vorrichtung zur Maschinenüberwachung selbst vorzusehen, sodass eine Auswertung der Bilddaten durch Experten ausschließlich "remote" nach dem Upload der Bilddaten in das Internet ermöglicht ist.

Mindestens eine Kamera einer erfindungsgemäßen Vorrichtung zur Maschinenüberwachung ist als eine Trigger-Kamera ausgebildet, mit der die Aufzeichnung von Bilddaten auslösbar ist.

Die Verwendung einer Trigger-Kamera ermöglicht die Fokussierung der Analyse der erfassten Daten auf einen relevanten Zeitbereich, sodass nur ein Teil der insgesamt erfassten Datenmenge ausgewertet werden muss.

Dabei ist die Trigger-Kamera mit der Auswerteeinheit derart verbunden, dass die mithilfe der Trigger-Kamera erfassten Bilddaten kontinuierlich auf das Eintreten eines vorbestimmten Trigger-Ereignisses auswertbar sind.

In Ausführungsformen mit einer ersten und einer zweiten Auswerteeinheit ist die Trigger-Kamera mit der ersten Auswerteeinheit derart verbunden, dass die mithilfe der Trigger-Kamera erfassten Bilddaten kontinuierlich auf das Eintreten eines vorbestimmten Trigger-Ereignisses auswertbar sind.

Das vorbestimmte Trigger-Ereignis wird dabei anhand der zu überwachenden Maschine oder Anlage bzw. des mit der jeweiligen Maschine oder Anlage ausgeführten Prozesses eingestellt.

Sobald die Trigger-Kamera ein Trigger-Ereignis erfasst, das von der Auswerteeinheit als ein solches erkannt wird, sind die aus der mit der mindestens einen Kamera kontinuierlich erfolgenden Aufzeichnung resultierenden Bilddaten auf ein relevantes Zeitfenster reduzierbar. Die Bilddaten dieses Zeitfensters sind dann für die Auswertung und Analyse mithilfe der Speichereinheit speicherbar.

Diese weitere Auswertung und Analyse kann in Ausführungsformen mit zwei Auswerteeinheiten mithilfe der zweiten Auswerteeinheit erfolgen.

In vorteilhaften Ausführungsformen der Erfindung ist das Zeitfenster für alle Kameras und/oder individuell für jede der Kameras einstellbar. Dies ist insbesondere im Hinblick auf die Anordnung der Kameras an der Maschine oder Anlage in Abhängigkeit des mit der Maschine oder Anlage ausgeführten Prozesses einer möglichst effektiven Begrenzung der Datenmengen zuträglich. Ist beispielsweise eine Kamera im zeitlichen Prozessablauf vor der Trigger-Kamera angeordnet, so ist ein anderes Zeitfenster relevant, als wenn die Kamera im zeitlichen Prozessablauf hinter der Trigger-Kamera angeordnet ist.

Bevorzugt ist dazu die absolute Länge des Zeitfensters und/oder die Position des Zeitfensters in Abhängigkeit des Trigger-Ereignisses konfigurierbar.

Im einfachsten Fall ist mit der Detektion des Trigger-Ereignisses ein festes Zeitfenster um das Trigger-Ereignis herum für die zu speichernden Bilddaten festgelegt.

Beispielweise ist dies durch Videosequenzen vorbestimmter Länge realisiert, wobei diejenigen Videosequenzen verworfen werden, die komplett vor dem um das Trigger-Ereignis liegenden Zeitfenster liegen, und neben der das Trigger-Ereignis enthaltenen Videosequenz und je nach Ausführungsform der Erfindung mit weiteren Kameras parallel aufgenommenen Videosequenzen ggf. eine definierte Zahl auf die das Trigger-Ereignis enthaltene Videosequenz folgende Videosequenzen einbezogen werden.

In Ausführungsformen der Erfindung ist die Vorrichtung zur Maschinenüberwachung zur Erkennung eines Trigger-Ereignisses durch die Erkennung einer Bewegung oder die Erkennung eines Stillstands ausgebildet.

Dazu ist die Auswerteeinheit in bevorzugten Ausführungsformen der Erfindung zur Erkennung von Unterschieden in aufeinanderfolgenden Bildern ausgebildet. Weitere Details dazu sind mit dem erfindungsgemäßen Verfahren zur Maschinenüberwachung offenbart.

Die Verwendung mehrerer Kameras erfordert für eine zuverlässige Auswertung und Analyse von Abhängigkeiten der mit den jeweiligen Kameras aufgezeichneten Ereignissen eine zeitliche Synchronisierung der Bilddaten. Auch die Detektion des Trigger-Ereignisses mithilfe der Trigger-Kamera erfordert für die zeitliche Beschränkung der mit der mindestens einen weiteren Kamera aufgenommenen Bilddaten eine zeitliche Einordnung des Trigger-Ereignisses zu den Bilddaten der jeweiligen Kamera.

Eine Verzögerung der von den verschiedenen Kameras an die Auswerteeinheit übermittelten Bilddaten resultiert insbesondere aus abweichenden Datenübertragungszeiten von der jeweiligen Kamera an die Auswerteeinheit oder der Übertragung eines Steuerbefehls von der Steuereinheit zu der jeweiligen Kamera.

In vorteilhaften Ausführungsformen der Erfindung ist die Vorrichtung zur Maschinenüberwachung daher zur Synchronisierung der mit den Kameras erfassten Bilddaten ausgebildet.

Insbesondere, wenn mithilfe des Netzwerkmoduls eine WLAN-Verbindung zu der mindestens einen Kamera der Vorrichtung zur Maschinenüberwachung realisiert ist, ist eine Zeitsynchronisierung erforderlich, da eine Synchronisierung vom WLAN-Protokoll selbst nicht unterstützt wird.

Details zu einer vorteilhaften Umsetzung der Synchronisation sind im Zuge des erfindungsgemäßen Verfahrens zur Maschinenüberwachung offenbart.

In erfindungsgemäßen Ausführungsformen ist eine Vorrichtung zur Maschinenüberwachung zur Erfassung und zur Auswertung der Daten weiterer Sensoren (z.B. Temperatur-, Vibrations-, Beschleunigungssensoren oder Wärmebildkameras) ausgebildet. Dadurch ist die Analyse des Einflusses von möglicherweise mit herkömmlichen Kameras nicht oder nur eingeschränkt erfassbarer Messgrößen auf eine Fehlfunktion einer Maschine oder Anlage ermöglicht.

In Ausführungsformen der Erfindung weist die erfindungsgemäße Vorrichtung zur Maschinenüberwachung dazu eigene Sensoren auf, die im Bereich der zu überwachenden Maschine oder Anlage platzierbar sind. In anderen Ausführungsformen weist die erfindungsgemäße Vorrichtung zur Maschinenüberwachung eine Schnittstelle zur Anbindung der zu überwachenden Maschine oder Anlage selbst auf, sodass auch die Daten von in der Maschine oder Anlage selbst verbauten Sensoren mithilfe der Vorrichtung zur Maschinenüberwachung auswertbar sind. Auch eine Kombination der obengenannten Alternativen ist möglich, sodass eine erfindungsgemäße Vorrichtung zu Maschinenüberwachung in Ausführungsformen zur Auswertung der mithilfe der mindestens einen Kamera erfassten Bilddaten und/oder den Messdaten weiterer Sensoren der Vorrichtung zur Maschinenüberwachung und/oder den Messdaten von in der Maschine oder Anlage selbst verbauten Sensoren ausgebildet ist.

In vorteilhaften Ausführungsformen der Erfindung weist die Vorrichtung zur Maschinenüberwachung zur Herstellung einer Verbindung mit dem Internet ein Internetmodul auf. Dadurch ist bevorzugt ein Fernzugriff auf die Mithilfe der Vorrichtung zur Maschinenüberwachung erfassten Daten ermöglicht, sodass externe Experten zur Auswertung und Analyse der Daten eingebunden werden können, ohne dass diese vor Ort sein müssen.

Der Fernzugriff auf die erfassten Daten kann dabei entweder durch ein Aufschalten auf die erfindungsgemäße Vorrichtung zur Maschinenüberwachung erfolgen oder durch das Hochladen der erfassten Bilddaten in das Internet, beispielsweise in die Cloud.

In Ausführungsformen der Erfindung sind das Netzwerkmodul und das Internetmodul in ein gemeinsames Netzwerk- und Internetmodul integriert.

In Ausführungsformen mit zwei Auswerteeinheiten kann die zweite Auswerteeinheit örtlich unabhängig von der übrigen Vorrichtung angeordnet und über eine Internetverbindung mit dieser verbunden sein.

Die mindestens eine Kamera ist in einer bevorzugten Ausführungsform der Erfindung mit einer Kamerahalterung ausgerüstet, durch die die Kamera an der Maschine oder Anlage oder im Bereich der Maschine oder Anlage befestigbar und auf den gewünschten Erfassungsbereich ausrichtbar ist.

In einer besonders bevorzugten Ausführungsform der Erfindung weist die Kamerahalterung einen lösbar mit einem Träger verbindbaren Fuß auf, an dem ein flexibel verformbares Bein befestigt ist. Das flexibel verformbare Bein weist dabei eine ausreichende Steifigkeit auf, um eine eingestellte Position zu halten. Dies ist beispielsweise durch ein aus mehreren entsprechend steifen Kugelgelenken gebildetes Bein realisierbar. Am Ende des Beins weist die Kamerahalterung eine Aufnahmeeinrichtung für die Kamera auf.

Vorteilhaft ist der Fuß der Kamerahalterung magnetisch, sodass die Kamerahalterung magnetisch mit einem entsprechenden Träger verbindbar ist. Dies ist im Bereich der zu überwachenden Maschinen oder Anlagen häufig gegeben.

Die im folgenden offenbarten Verfahrensschritte eines erfindungsgemäßen Verfahrens zur Maschinenüberwachung sind sowohl einzeln als auch in allen ausführbaren Kombinationen Bestandteil der Erfindung.

Ein erfindungsgemäßes Verfahren zur Maschinenüberwachung umfasst die kamerabasierte Überwachung einer Maschine bzw. mindestens eines Bereichs einer Maschine mit mindestens einer Kamera, wobei die mithilfe der mindestens einen Kamera erfassten Bilddaten ausgewertet werden.

In bevorzugten Ausführungsformen des erfindungsgemäßen Verfahrens werden zeitgleich mit 2, 3 oder 4 Kameras Bilddaten aus je Kamera einem Bereich und/oder Blickwinkel der zu überwachenden Maschine oder Anlage erfasst und ausgewertet.

In weiteren vorteilhaften Ausgestaltungen der Erfindung werden zusätzlich weitere Sensordaten erfasst und ausgewertet. Solche weiteren Sensordaten können beispielsweise mit entsprechenden Sensoren erfasst die Temperatur, Vibrationen oder Beschleunigungen oder mithilfe von Wärmebildkameras erfasste Bilder sein.

Da Fehler in mithilfe des erfindungsgemäßen Verfahrens erfassten Herstellungsprozessen in vielen Fällen nur sporadisch auftreten und bei einer kontinuierlichen Erfassung und Speicherung der Bilddaten der mindestens einen Kamera und/oder weiterer Sensoren große Datenmengen anfallen, die viel Speicherplatz benötigen und deren Detailauswertung aufwändig ist, ist erfindungsgemäß eine Kamera als Trigger-Kamera konfiguriert.

Die Trigger-Kamera erfasst kontinuierlich die Bilddaten im Sichtbereich der Kamera. Diese Bilddaten werden fortlaufend auf das Auftreten eines Trigger-Ereignisses ausgewertet. Sobald ein Trigger-Ereignis detektiert wird, wird das mit der mindestens einen Kamera erfasste Video auf ein vordefiniertes Zeitfenster beschränkt (bzw. gekürzt) wird. Dadurch wird die zu speichernde und auszuwertende Datenmenge signifikant reduziert.

Diese Fensterung wird in entsprechenden Ausführungsformen der Erfindung auch für andere ggf. erfasste Sensordaten angewendet.

In einer Ausführungsform der Erfindung werden mit der mindestens einen Kamera kontinuierlich Videosequenzen einer vorgegebenen Länge, wie beispielsweise 50 Sekunden, erfasst. Diese Videosequenzen werden dann nacheinander auf das Auftreten eines Trigger-Ereignisses ausgewertet, während zeitgleich bereits die nächste Videosequenz mit der mindestens einen Kamera aufgenommen wird.

In einer bevorzugten Ausführungsform des erfindungsgemäßen Verfahrens werden parallel Videos mit 2, 3 oder 4 Kameras aufgezeichnet, während eine der Kameras als Trigger-Kamera konfiguriert ist.

Die auf ein Auftreten eines Trigger-Ereignisses im Video der Trigger-Kamera hin erfolgende Fensterung und die später erfolgende Auswertung der Videos der weiteren Kameras oder weiterer Sensoren erfordert eine zeitliche Synchronisierung der Videos und ggf. der weiteren Sensormessdaten zueinander, da der zeitliche Bezug der zeitlich beschränkten Videos oder Sensormessdaten sonst nicht gewährleistet werden kann.

Eine solche zeitliche Synchronisierung ist insbesondere bei der Anbindung der mindestens einen Kamera und mindestens einer weiteren Kamera und/oder eines weiteren Sensors über ein Netzwerk erforderlich, wobei die Übertragungsverzögerungen der einzelnen Datenübertragungswege (d.h. von einer Steuer- und Auswerteeinheit zu der jeweiligen Kamera bzw. dem jeweiligen Sensor und zurück) voneinander abweichen können. Dies ist beispielsweise bei der Anbindung von Kameras oder Sensoren über eine WLAN-Verbindung der Fall. Darüber hinaus bieten aktuelle WLAN-Protokolle keine eigene Synchronisierungsmechanismen an.

In einem vorteilhaften Ausführungsform eines erfindungsgemäßen Verfahrens zur Maschinenüberwachung wird daher eine zeitliche Synchronisierung der erfassten Bilddaten verschiedener Kameras und ggf. der zusätzlich erfassten Sensordaten durchgeführt.

In einer Ausführungsform der Erfindung wird die Synchronisierung der Bild- bzw. Sensormessdaten durchgeführt, indem an die jeweiligen Kameras bzw. Sensoren eine Zeitabfrage gesendet wird. In jeder Kamera bzw. Sensor muss daher eine eigene lokale Uhr (real time clock - RTC) laufen. Zum Zeitpunkt der Zeitabfrage an der jeweiligen Kamera bzw. dem jeweiligen Sensor wird dort die Zeit der lokalen Uhr ausgelesen und über das Netzwerk an die zentrale Steuer- und Auswerteeinheit oder an das Netzwerkmodul übertragen. Sobald die lokale Zeit der jeweiligen Kamera bzw. des jeweiligen Sensors von der Steuer- und Auswerteeinheit oder dem Netzwerkmodul empfangen wird, liest diese die Zeit ihrer lokalen Uhr aus und bestimmt die Differenz der Zeiten. Diese Differenz wird dann als die Kanalverzögerung angenommen. Bevorzugt wird die Kanalverzögerung eines Kanals durch eine Mittelung über mehrere Messungen bestimmt.

Durch die Messung der Kanalverzögerungen der verschiedenen Kanäle wird in Ausführungsformen der Erfindung die relative Verzögerung von Kanal zu Kanal bestimmt, sodass die mithilfe der Kameras bzw. der mindestens einen Kamera und mindestens einem weiteren Sensor gesammelten Daten zeitlich synchronisiert werden können.

In einer bevorzugten Ausführungsform der Erfindung erfolgt nach der Detektion eines Trigger-Ereignisses, der Synchronisation der über die verschiedenen Kanäle erhaltenen Daten und der anschließenden Fensterung der Daten ein sofortiges Bereitstellen der Videoaufnahmen und ggf. der zusätzlichen Sensordaten in einem Analysemodus.

Je nach Ausgestaltung des Verfahrens werden die Daten einem Benutzer des Verfahrens vor Ort auf einem Display visuell aufbereitet ausgeben und/oder über das Internet zur Analyse zur Verfügung gestellt.

Im Analysemodus erfolgt in einer bevorzugten Ausgestaltung des erfindungsgemäßen Verfahrens eine synchrone Darstellung der Videoaufnahmen aller Kameras und ggf. der Messdaten zusätzlicher Sensoren zur parallelen Auswertung.

Diese Darstellung ist in Ausführungsformen der Erfindung durch eine entsprechende der Anzahl der Kameras und/oder Sensoren unterteilte Anzeige realisiert, sodass die jeweiligen Daten nebeneinander sichtbar sind.

In Ausführungsformen der Erfindung ist im Analysemodus eine Auswertung der Bilddaten bzw. der weiteren Sensormessdaten Frame-für-Frame (bzw. Messwert für Messwert) und/oder in Slow-Motion und/oder mit einer Zoom-Funktion ermöglicht.

Weiterhin ist in bevorzugten Ausführungsformen der Erfindung auf Bilddaten ein Farbfilter anwendbar, sodass eine Analyse durch das Ausblenden von Farben und/oder das Herausfiltern einer einzigen Farbe erleichtert werden kann. Ein solcher Farbfilter kann in Ausführungsformen der Erfindung auch bei der Auswertung des Bildmaterials im Hinblick auf das Vorliegen eines Trigger-Ereignisses verwendet werden.

Bei der Anwendung des Farbfilters werden die mithilfe mindestens einer Kamera (3) erfassten Bilddaten mithilfe eines Farbfilters derart bearbeitet, dass der mithilfe des Farbfilters bearbeitete Bilddatensatz nur einen definierten begrenzten Farbbereich aufweist
In vorteilhaften Ausführungsformen der Erfindung werden zur Speicherung vorgesehene Videos automatisch oder auf eine manuelle Eingabe hin einem Videorendering bzw. einer Videokomprimierung unterzogen, sodass für einen Export dieser Videosequenzen (z.B. als mpeg-Datei) eine geringere Dateigröße realisiert wird. Die synchronisierten Videosequenzen der einzelnen Kameras können als gerenderte Video-Datei dadurch auch auf jedem Gerät mit entsprechender gängiger Wiedergabesoftware und unabhängig von der speziellen Software auf einer erfindungsgemäßen Vorrichtung zur Maschinenüberwachung bzw. der Umsetzung eines erfindungsgemäßen Verfahrens zur Maschinenüberwachung in Software abgespielt und ausgewertet werden.

In einer besonders bevorzugten Ausführungsform des erfindungsgemäßen Verfahrens ist ein Fernzugriff auf die und/oder Cloud-Sharing der erfassten und zumindest zwischengespeicherten Daten implementiert. Dazu ist ein internetbasierter Zugriff von außen auf die Daten und/oder ein Upload der Daten auf einen Webserver implementiert, von dem die Daten zur Analyse und Auswertung abrufbar sind.

Dies ermöglicht die Einbindung externer Experten zum Aufspüren von Fehlern im Betrieb der Maschine oder Anlage und zur Behebung dieser Fehler.

In bevorzugten Ausführungsformen der Erfindung ist eine Automatische Benachrichtigung eines oder mehrerer definierter Benutzer bei der Erkennung eines Trigger-Ereignisses z.B. per E-Mail, SMS oder push-Nachricht implementiert.

Dadurch können mit der Fehlererkennung und Behebung betraute Personen unmittelbar mit der Auswertung der gesammelten Daten beginnen, ohne dass unnötige Zeit abgewartet wird.

In einer weiteren vorteilhaften Ausführungsform des erfindungsgemäßen Verfahrens ist ein visuelles und/oder ein akustisches Erkennen von Fehlern oder eine Qualitätskontrolle durch einen Master-Frame-Vergleich implementiert.

Dabei wird eine Sequenz der entsprechenden Sensormessdaten, bevorzugt eine Videosequenz, im fehlerfrei ablaufenden Prozess oder einem Teilprozess aufgenommen. Dabei wird angenommen, dass in dem betrachteten Prozess oder Teilprozess ein periodischer Vorgang abläuft.

Dies beispielweise der Fall, wenn in dem entsprechenden Bereich die gefertigten und idealerweise identischen Produkte nacheinander durch den Bildbereich laufen. Aus dieser Sequenz wird ein Master-Frame definiert. Dieser Master-Frame ist entweder ein Bild, in dem ein bestimmtes Qualitätsmerkmal oder ein vermuteter Fehler gut zu erkennen ist, oder ein akustisches Spektrum zu einem bestimmten Zeitpunkt.

Die Erfassung der Sensormessdaten erfolgt gemäß der eingestellten Abtastrate an einer Serie von Datenerfassungszeitpunkten.

Im laufenden Prozess bzw. Teilprozess wird dann jede Periode der Sensormessdaten auf das Vorliegen des so definierten Master-Frames analysiert, indem die Sensormessdaten an den einzelnen Datenerfassungszeitpunkten automatisch mit dem Master-Frame verglichen werden. Wird in einer Periode an mindestens einem Datenerfassungszeitpunkt eine hinreichende Übereinstimmung der erfassten Sensormessdaten mit dem Master-Frame festgestellt, so wird diese als fehlerfrei angesehen. Umgekehrt wird eine Periode als fehlerbehaftet angesehen, wenn keine hinreichende Übereinstimmung mit dem Master-Frame festgestellt werden konnte.

In einer bevorzugten Ausführungsform eines erfindungsgemäßen Verfahrens zur Maschinenüberwachung wird eine erfindungsgemäße Vorrichtung zur Maschinenüberwachung verwendet.

Ein erfindungsgemäßes Computerprogrammprodukt dient installiert auf einer geeigneten Hardware der Erfassung und Auswertung von Sensordaten zur Überwachung von Maschinen und Anlagen und mit diesen Maschinen oder Anlagen ausgeführten Prozessen.

Ein erfindungsgemäßes Computerprogrammprodukt zur Maschinenüberwachung umfasst Befehle, die bei der Ausführung durch mindestens einen Computer diesen veranlassen, ein erfindungsgemäßes Verfahren zur Maschinenüberwachung durchzuführen.

In bevorzugten Ausführungsformen der Erfindung weist das Computerprogrammprodukt mindestens zwei Softwaremodule auf, wobei mindestens ein erstes Softwaremodul des Computerprogrammprodukts zur Installation und Ausführung auf mindestens einer Kamera und mindestens ein zweites Softwaremodul des Computerprogrammprodukts zur Installation und Ausführung auf einer Zentraleinheit und/oder einem Netzwerkmodul ausgebildet ist.

Neben der Verwendung zur Überwachung von Maschinen und Anlagen sind mit der Erfindung auch die Überwachung von anderen Dingen und Abläufen möglich. Beispielsweise ist auch an eine Verwendung im Bereich des Sports z.B. zur Erkennung bestimmter Situationen gedacht.

In den nachfolgend beschriebenen Figuren sind beispielhafte Ausführungsformen der Erfindung schematisch dargestellt. Es zeigen:
- Figur 1:: Eine schematische Darstellung einer erfindungsgemäßen Vorrichtung zur Maschinenüberwachung im Bereich einer Maschine,
- Figur 2:: Ein Blockschaltbild einer erfindungsgemäßen Ausführungsform einer Vorrichtung zur Maschinenüberwachung,
- Figur 3:: Ein schematisches Ablaufdiagramm der Implementierung einer Trigger-Kamera in einer erfindungsgemäßen Vorrichtung und in einem erfindungsgemäßen Verfahren zur Maschinenüberwachung,
- Figur 4A:: Eine schematische Darstellung eines einzelnen aufgenommenen Bildes aus einem Bereich einer überwachten Maschine,
- Figur 4B:: Eine schematische Darstellung der Bildauswertung zur Erkennung des Vorliegens eines Trigger-Ereignisses,
- Figur 5:: Ein Diagramm zur Bildauswertung zur Erkennung des Vorliegens eines Trigger-Ereignisses,
- Figur 6:: Ein weiteres Diagramm zur Bildauswertung zur Erkennung des Vorliegens eines Trigger-Ereignisses,
- Figur 7:: Ein Diagramm zur Bildauswertung ohne Farbfilter,
- Figur 8:: Ein Diagramm zur Bildauswertung mit Farbfilter,
- Figur 9:: Ein Diagramm zur Bildauswertung für einen Master-Frame-Vergleich und
- Figur 10:: Ein schematisches Ablaufdiagramm zur Synchronisation der verschiedenen Kanäle einer erfindungsgemäßen Vorrichtung bzw. eines erfindungsgemäßen Verfahrens.

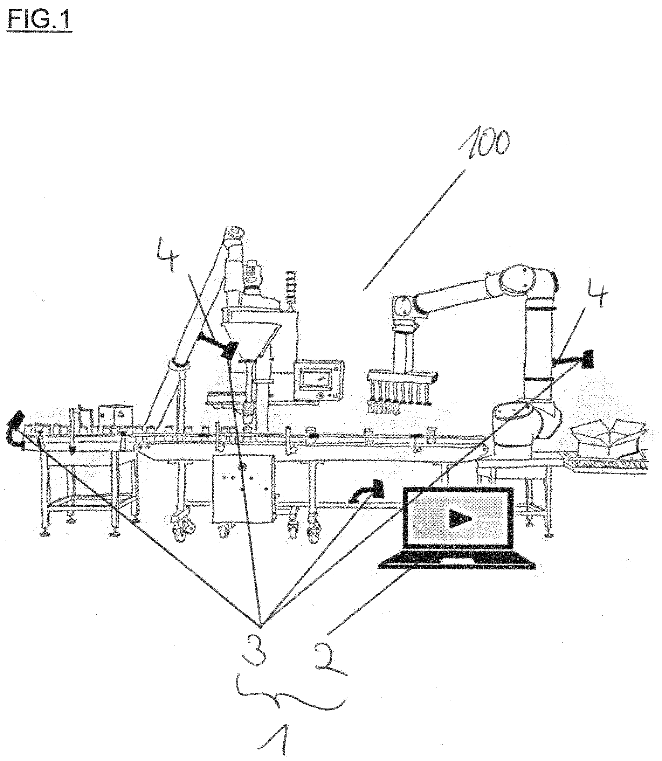

In Figur 1 ist eine erfindungsgemäße Vorrichtung zur Maschinenüberwachung (1) im Bereich einer Maschine (100) schematisch dargestellt. Die Vorrichtung zur Maschinenüberwachung (1) weist eine Zentraleinheit (2) und vier Kameras (3) auf, die mithilfe von Kamerahalterungen (4) an der zu überwachenden Maschine (100) befestigt sind. Durch die Ausrichtung der Kameras (4) sind deren Erfassungsbereiche auf bestimmte Bereiche der Maschine (100) gerichtet, sodass diese mit jeweils einer Kamera (3) überwacht werden können.

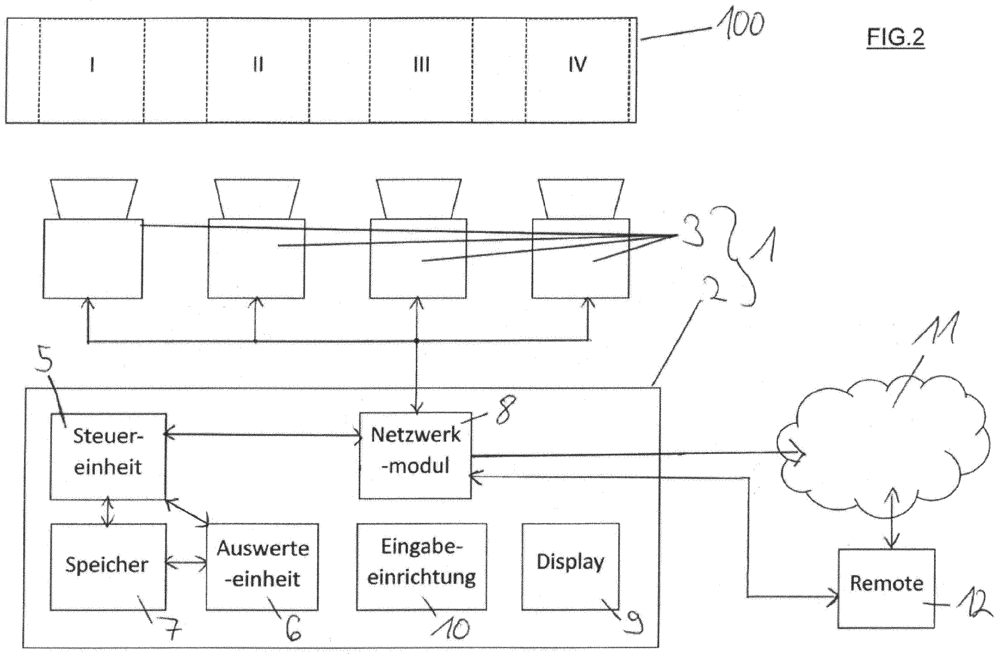

Figur 2 zeigt ein schematisches Blockschaltbild einer Ausführungsform einer erfindungsgemäßen Vorrichtung zur Maschinenüberwachung (1). Diese weist vier Kameras (3) auf, die jeweils auf einen bestimmten Bereich (I, II, III, IV) der Maschine (100) ausgerichtet sind. Die Zentraleinheit (2) der Vorrichtung zur Maschinenüberwachung (1) weist eine Steuereinheit (5), eine Auswerteeinheit (6), einen Speichereinheit (7), ein Netzwerkmodul (8), ein Display (9) und eine Eingabeeinrichtung (10) auf.

Die Eingabeeinrichtung (10) dient zur Erfassung von Benutzereingaben an der Zentraleinheit (2) der Vorrichtung zur Maschinenüberwachung (1) und das Display (9) zur Ausgabe von Bild- und/oder Messdaten an mindestens einen Benutzer der Vorrichtung (1).

Mithilfe des als ein Netzwerk- und Internetmodul ausgebildeten Netzwerkmoduls (8) ist die Zentraleinheit (2) mit den Kameras (3) verbunden. Diese Verbindungen sind bevorzugt als WLAN-Verbindungen ausgeführt. Weiterhin sind die mithilfe der Kameras (3) erfassten und in der Zentraleinheit (2) ausgewerteten und bearbeiteten Bilddaten mithilfe des Netzwerkmoduls (8) über eine Internetverbindung von der Zentraleinheit (2) auf einen Webserver in die Cloud (11) hochladbar und/oder es ist über eine Internetverbindung ein Fernzugriff auf die Bilddaten auf der Zentraleinheit (2) der Vorrichtung zur Maschinenüberwachung (1) für mindestens eine Fernzugriffsstation (12) ermöglicht.

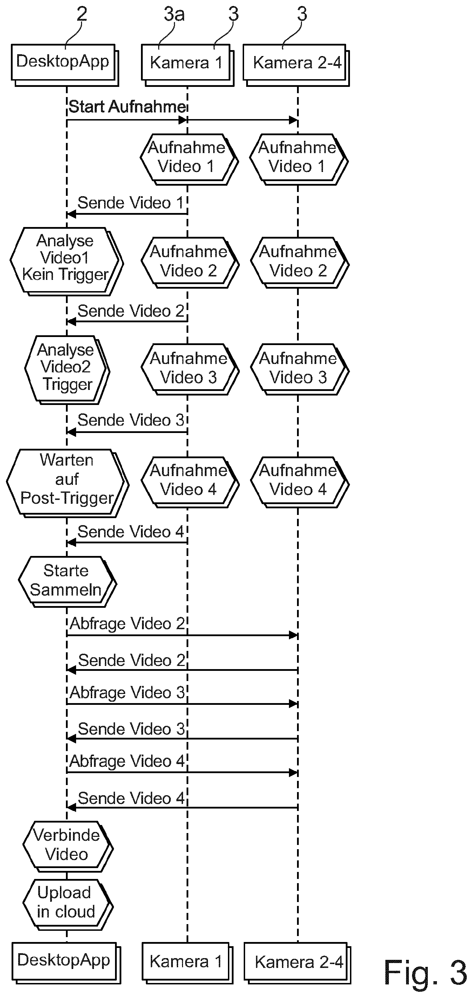

In Figur 3 ist schematisch die Konfiguration einer Kamera (3) als Trigger-Kamera (3a) in einer erfindungsgemäßen Ausführungsform einer Vorrichtung zur Maschinenüberwachung (1) und eines Verfahrens zur Maschinenüberwachung dargestellt. Die Videosequenzen sind jeweils gleich lang, beispielsweise 50 Sekunden.

Mithilfe der Zentraleinheit (2) der Vorrichtung zur Maschinenüberwachung (1) wird (von der Steuereinheit (5) über das Netzwerkmodul (8)) ein Befehl zum Starten der Aufnahme an alle Kameras (3) gesendet. Die Kameras (3) nehmen daraufhin jeweils eine erste Videosequenz (Video 1) auf. Nach dem Abschluss der Aufnahme der Videosequenzen wird diese von der Trigger-Kamera (3a) an die Zentraleinheit (2) gesendet. Das mit der Trigger-Kamera (3a) aufgenommene Video wird auf das Vorliegen eines Trigger-Ereignisses hin ausgewertet. Da im vorliegenden Beispiel kein Trigger-Ereignis detektiert wird, werden die übrigen Videos der ersten Videosequenzen verworfen bzw. nicht von der Zentraleinheit (2) abgerufen. Nach dem Abschluss der Aufnahme der ersten Videosequenzen (Video 1) beginnen die Kameras (3) unmittelbar jeweils mit der Aufnahme einer weiteren Videosequenz (Video 2), sodass die Auswertung des Video 1 der Trigger-Kamera (3a) in der Zentraleinheit (2) zeitgleich erfolgt. Nach Abschluss der Aufnahme der zweiten Videosequenz (Video 2) sendet die Trigger-Kamera (3) die Videosequenz (Video 2) an die Zentraleinheit (2), die das Video auf das Vorliegen eines Trigger-Ereignisses hin auswertet. Die Kameras (3) starten nach dem Abschluss der Aufnahme der zweiten Videosequenz unmittelbar jeweils mit der Aufnahme einer dritten Videosequenz (Video 3). Da nun ein Trigger-Ereignis in Video 2 der Trigger-Kamera (3a) detektiert wurde, sind die dritten Videosequenzen (Video 3) der Kameras (3) für die Auswertung und Analyse relevant.

In dem dargestellten Beispiel soll nach dem Auftreten des Triggers ein längeres Zeitfenster ausgewertet werden, als eine Videosequenz lang ist. Daher ist eine Post-Trigger-Zeit definiert, die hier einer vorgegebenen Zeit entspricht, die ablaufen muss, bevor die Videosequenzen der Kameras (3) abgerufen werden. Während die Zentraleinheit (2) auf den Ablauf der Post-Trigger-Zeit wartet, nehmen die Kameras (3) die nächste Videosequenz (Video 4) auf.

Nach dem Ablauf der Post-Trigger-Zeit werden dann die übrigen für die Auswertung relevanten Videosequenzen von den Kameras (3) abgerufen. Da die Trigger-Kamera (3a) jede Videosequenz unmittelbar nach Abschluss der Aufnahme an die Zentraleinheit (2) übermittelt hat, müssen nur die Videosequenzen der anderen Kameras (3) abgerufen werden. Auf das Senden eines entsprechenden Befehls hin, werden die Videosequenzen Video 3 und Video 4 von den übrigen Kameras (3) an die Zentraleinheit (2) übermittelt.

In der Zentraleinheit (2) werden die Videosequenzen der Kameras (3) zusammengefügt und in einem Datenpaket kombiniert.

Das Datenpaket enthält die einzelnen Videosequenzen der Kameras als einzelne Dateien und/oder das aus den einzelnen synchronisierten Videosequenzen der Kameras gerenderte Video.

Anschließend wird das Datenpaket über eine Internetverbindung in die Cloud hochgeladen, sodass dieses ortsunabhängig von Experten auswertbar ist.

Alternativ und/oder zusätzlich ist auch die Ausgabe der Videosequenzen unmittelbar an der Zentraleinrichtung (2) und/oder der Fernzugriff auf das Datenpaket von mindestens einer Fernzugriffsstation möglich.

In anderen Ausführungsformen der Erfindung ist der Trigger durch das Auftreten eines weiteren mithilfe der Trigger-Kamera erfassten Ereignisses und/oder einer mithilfe einer durch einen anderen Sensor erfassten Zustandsänderung realisiert.

Die Detektion der Trigger-Ereignisses erfolgt in Ausführungsformen der Erfindung durch die Erkennung einer Bewegung oder eines Stillstands. Beispielsweise kann der Stillstand eines Maschinenteils oder von mithilfe der Maschine (100) beförderten Produkten eine Störung implizieren. Auch eine Bewegung, beispielsweise durch ein durch andere Mechanismen als fehlerhaft erkannten Produkts, das aus dem Prozess ausgeworfen wird, kann eine solche Störung implizieren. Darüber hinaus sind auch andere Ereignisses, wie beispielsweise das Aufleuchten einer (Warn-)Leuchte oder die Veränderung einer Zahl oder einer anderen Anzeige auf einem Maschinen-Bedien- oder Überwachungsmodul geeignete Trigger-Ereignisse im Sinne der vorliegenden Erfindung.

Die Detektion von Bewegung oder Stillstand erfolgt in Ausführungsformen der Erfindung durch eine Berechnung der Differenzen zwischen aufeinanderfolgenden Bildern (Frames) einer Videosequenz.

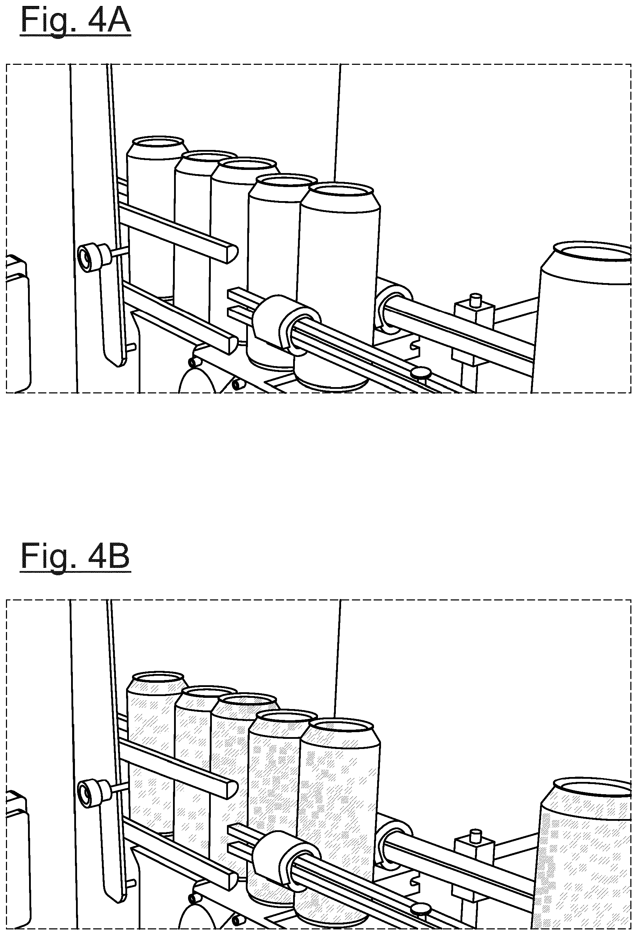

Figur 4A zeigt ein solches Frame einer aufgenommenen Videosequenz. Figur 4B zeigt die grafische Darstellung der Differenzberechnung der einzelnen Pixel von zwei aufeinanderfolgenden Frames. Dabei bedeutet ein weißer Pixel keine Änderung und ein schwarzer Pixel eine Änderung um 100%. Die dazwischenliegenden Differenzen sind entsprechenden Graustufen zugeordnet.

In einer Ausführungsform der Erfindung werden die Frames einer Videosequenz für die Differenzberechnung extrahiert und in Graustufenbilder konvertiert. Dabei hat jeder Pixel einen Wert zwischen 0 (Schwarz) und 255 (Weiß). Jedes Frame der Videosequenz wird mit dem zeitlich nachfolgenden Frame verglichen, wobei ein struktureller Ähnlichkeitsindex der beiden Frames berechnet wird. Dieser Ähnlichkeitsindex hat einen Wert zwischen 0,0 und 1,0, wobei 1,0 eine Identität der Bilder und 0,0 eine vollständige Unähnlichkeit der Bilder bedeutet.

In einer bevorzugten Ausführungsform der Erfindung wird dabei das in der "Wang, Z., Bovik, A. C., Sheikh, H. R., & Simoncelli, E. P. (2004). Image quality assessment: From error visibility to structural similarity. IEEE Transactions on Image Processing, 13, 600-612" beschriebene Verfahren verwendet.

In einer Ausführungsform der Erfindung wird aus dem Inversen des strukturellen Ähnlichkeitsindex das Aktivitätsniveau bestimmt, das zwischen 0% und 100% liegt. Dabei liegt das Aktivitätsniveau bei identischen Bildern bei 0% und bei vollständig verschiedenen Bildern bei 100%. Aus dem in Figur 4B gezeigten Graustufenbild wird ein Aktivitätsniveau von 9,03% errechnet.

Soll als Trigger-Ereignis nun das Stoppen eines überwachten Prozesses dienen, wird in Abhängigkeit des zu überwachenden Prozesses und der im laufenden Prozess zu erwartenden Aktivitätsniveaus ein Schwellwert definiert. Fällt das Aktivitätsniveau unter diesen Schwellwert und bleibt das Aktivitätsniveau für eine vordefinierte Zeit unter diesem Schwellwert, so wird das Vorliegen eines Prozessstops als Trigger-Ereignis erkannt.

In einer Ausführungsform der Erfindung ist der Schwellwert zur Erkennung eines Prozessstops bei einem Aktivitätsniveau von 7% definiert.

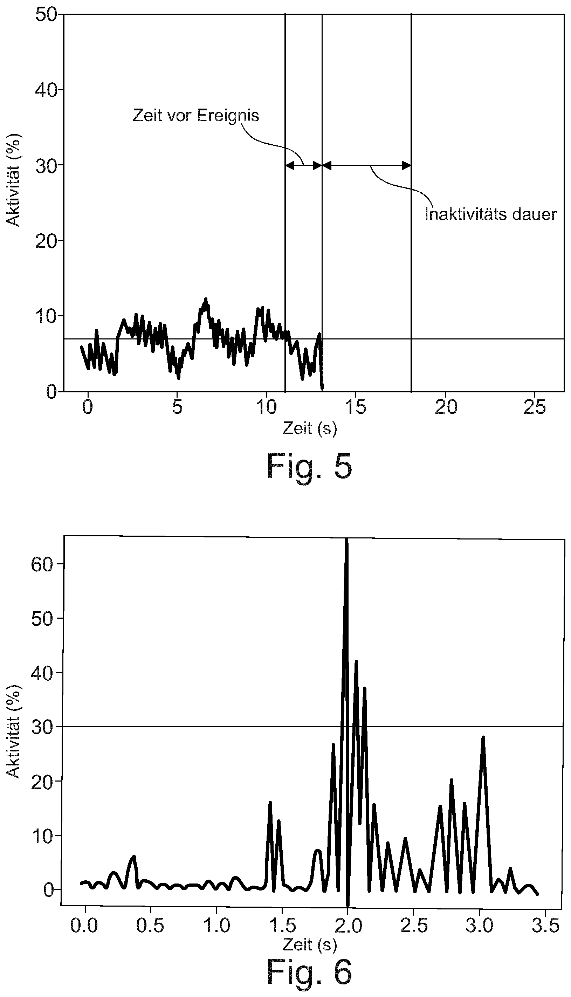

Figur 5 zeigt eine grafische Darstellung der Auswertung des Aktivitätsniveaus einer Videosequenz. Zu einem Zeitpunkt t bei etwa 13 Sekunden fällt das Aktivitätsniveau unter 7%, sodass ein Trigger-Ereignis detektiert wird. Nach dem Trigger-Ereignis liegt das Aktivitätsniveau für länger als eine vorbestimmte Zeit (beispielsweise 5 Sekunden) bei 0%, d.h. der überwachte Prozess hat gestoppt (Inaktive Phase).

Figur 6 zeigt eine grafische Darstellung der Auswertung des Aktivitätsniveaus einer Videosequenz, wobei hier jedoch der Start einer Bewegung als Trigger-Ereignis detektiert werden soll. Dazu wird ein entsprechender Schwellwert des Aktivitätsniveaus definiert, bei dessen Überschreiten das Trigger-Ereignis erkannt wird.

In dem dargestellten Beispiel liegt der Schwellwert bei einem Aktivitätsniveau von 30%. Zum Zeitpunkt t bei etwa 20 Sekunden wird das Vorliegen des Trigger-Ereignisses erkannt.

Auch der Schwellwert zur Erkennung einer Bewegung als Trigger-Ereignis ist vorzugsweise an die in dem zu überwachenden Prozess zu erwartenden Aktivitätsniveaus angepasst.

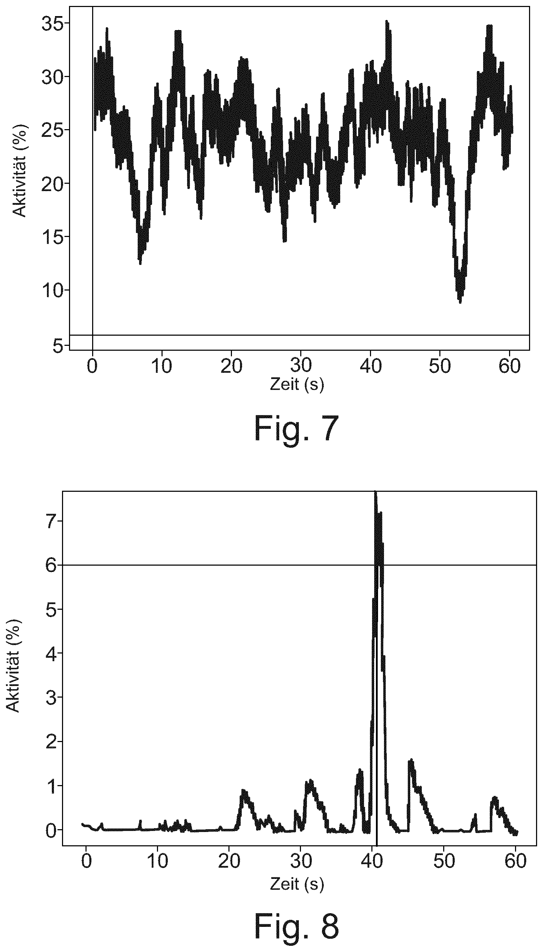

Anhand der Figuren 7 und 8 wird der Farbfilter der vorliegenden Erfindung genauer erläutert. Die Farbfilter-Funktionalität erlaubt in entsprechenden Ausführungsformen der Erfindung das Fokussieren auf eine bestimmte Farbe, insbesondere für die Auswertung der Videosequenzen der Trigger-Kamera im Hinblick auf das Vorliegen eines Trigger-Ereignisses.

Jeder Farbe ist dabei ein RGB-Farbwert zugeordnet (beispielsweise Rot-Wert: 0x89, Grün-Wert: 0x17 und Blau-Wert: 0x1f für einen bestimmten Rotton). Um diesen RGB-Farbwert wird für den Farbfilter nun ein Toleranzbereich definiert, in dem eine detektierte Farbe noch der definierten Farbe des Farbfilters entspricht. In einer Ausführungsform der Erfindung liegt der Toleranzbereich in einem Abstand von 30 um den RGB-Wert der definierten Farbe herum. In diesem Beispiel kann der Rot-Wert von 0x64 bis 0xa0 reichen, entsprechend gelten Wertebereiche des Grünwerts und des Blauwerts in Abhängigkeit der anderen Farbwerte im Toleranzbereich.

Der Farbfilter dient insbesondere der Erkennung von komplexeren Ereignissen durch die Fokussierung der Bildauswertung auf einen relevanten Farbbereich.

Figur 7 zeigt das Aktivitätsniveau einer Videosequenz über der Zeit. Über die gesamte Videosequenz ist ein stetig variierendes und meist hohes Aktivitätsniveau erkennbar. Figur 8 zeigt das Aktivitätsniveau derselben Videosequenz mit aktiviertem Farbfilter. In Bezug auf die im Farbfilter definierte Farbe ist über fast die gesamte Dauer der Videosequenz ein nur geringes Aktivitätsniveau erkennbar. Nur im Bereich bei knapp über 40 Sekunden ist ein starker Anstieg der Aktivität über den hier definierten Schwellwert von 6% feststellbar.

Durch den Farbfilter lassen sich auch Farbwechsel von (Warn-)Leuchten einer zu überwachenden Maschine oder Anlage einfach erkennen.

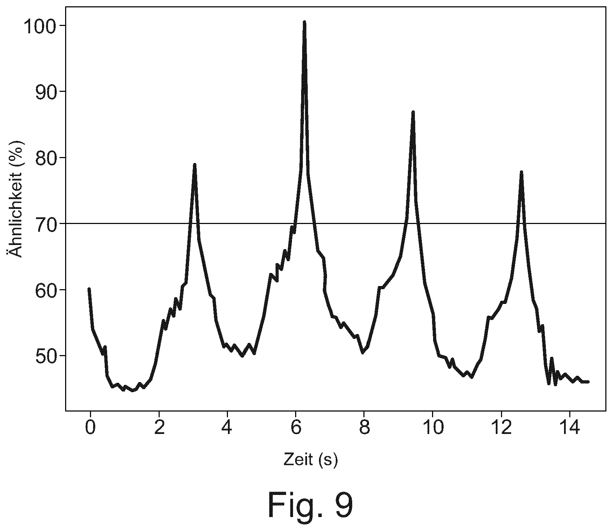

In Figur 9 ist ein Ähnlichkeitsdiagramm einer Videosequenz über der Zeit aufgetragen. Dabei handelt es sich um die Funktionalität des Master-Frame-Vergleichs, bei dem jedes Frame einer Videosequenz mit einem vordefinierten Master-Frame verglichen wird.

Der Master-Frame-Vergleich eignet sich in zyklischen Prozessen zur Erkennung des erfolgreichen Ablaufs eines Prozesses oder von Fehlern in diesen Prozessen.

In dem dargestellten Beispiel liegt eine Videosequenz einer Abfüllmaschine für Flaschen zugrunde, wobei in dem überwachten Kamerabereich jeweils eine Flasche mit einem Etikett versehen wird. Der Master-Frame ist als ein Bild mit korrekt etikettierter Flasche definiert. Durch den Master-Frame-Vergleich lässt sich nun in jedem Zyklus feststellen, ob die Etikettierung der Flasche erfolgreich durchgeführt wurde, oder ob ein Fehler im Prozess vorliegt.

Figur 9 zeigt eine Videosequenz mit vier vollständigen Prozesszyklen. Zwischen 3 und 4 Sekunden, 6 und 7 Sekunden, 9 und 10 Sekunden und etwa bei 13 Sekunden werden hohe Ähnlichkeitswerte der ausgewerteten Frames mit dem Master-Frame festgestellt. Die Ähnlichkeitswerte liegen dabei jeweils über dem hier definierten Schwellwert der Ähnlichkeit von 70%, sodass jeweils ein erfolgreicher Abschluss des Zyklus detektiert wird.

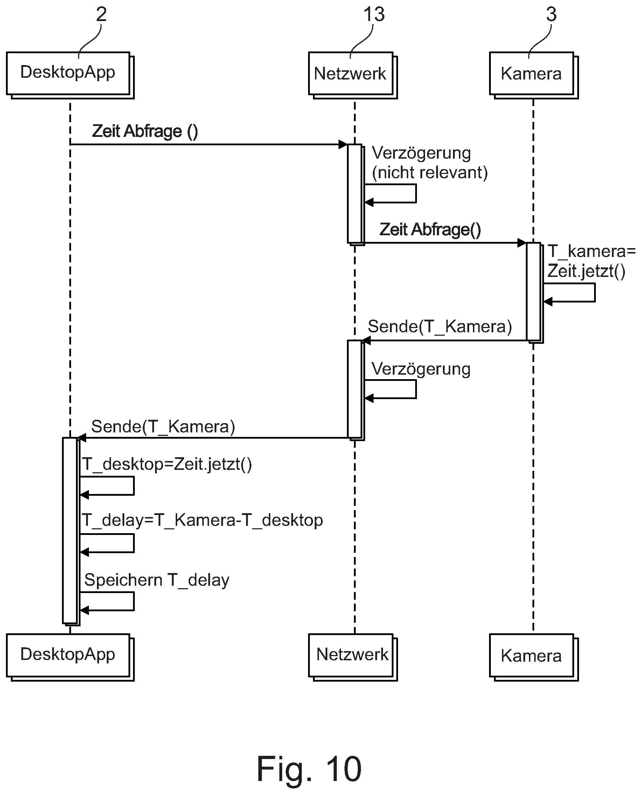

Figur 10 zeigt einen schematischen Ablauf der Synchronisierung in einer erfindungsgemäßen Vorrichtung zur Maschinenüberwachung (1) bzw. in einem erfindungsgemäßen Verfahren zur Maschinenüberwachung.

Die Zentraleinheit (2) schickt einen Befehl zur Abfrage der lokalen Zeit über den Übertragungskanal (13) zu einer Kamera (3). Die Kamera (3) liest die Zeit der lokalen Uhr aus und sendet diese über den Übertragungskanal (13) an die Zentraleinheit (2). Dabei wird die Übertragung der ausgelesenen Zeit um die Übertragungsverzögerung (Delay) verzögert. Sobald die Zentraleinheit (2) die Zeit der Uhr der Kamera (3) empfangen hat, liest die Zentraleinheit (2) die eigene lokale Uhr aus und bestimmt die Differenz der eigenen Zeit zur von der Kamera (2) ausgelesenen Zeit. Diese Differenz wird als die Verzögerung des Übertagungskanals (13) gespeichert. Diese Kanalverzögerung beinhaltet die Verzögerung des Übertragungskanals (13) im Netzwerk selbst und, was in dieser Anwendung noch wichtiger ist, den Zeitunterschied der lokalen Uhren der Kamera (3) und der Zentraleinheit (2).

Da diese Uhren, dabei insbesondere die lokalen Uhren verschiedener Kameras (3) nicht miteinander synchronisiert sind, können (und werden) die Uhren - zum gleichen Zeitpunkt ausgelesen - verschiedene Werte ausgeben. Diese lokalen Zeiten werden mit den aufgenommenen Videosequenzen als Zeitstempel übertragen, sodass die "gleichen" Zeiten in den Videosequenzen verschiedener Kameras (3) nicht zum tatsächlich gleichen Zeitpunkt aufgenommen wurden.

Durch den Vergleich der Kanalverzögerung der verschiedenen Kanäle zueinander sind die von den jeweiligen Kameras oder Sensoren an die Zentraleinheit (2) gesendeten Daten jedoch zeitlich synchronisierbar.

Eine Annahme, die dabei getroffen wird ist, dass die Übertragungsverzögerung der verschiedenen Kanäle etwa gleich ist, bzw. dass diese nur unwesentlich voneinander abweichen.

Durch die Wiederholung der Zeitmessungen und der Berechnung der Differenzen kann eine zeitliche Änderung der Übertragungsverzögerung der Kanäle selbst und zueinander berücksichtigt werden.

In einer bevorzugten Ausführungsform der Erfindung werden in kurzer Abfolge hintereinander mehrere, z.B. 10, Zeitmessungen vorgenommen und die Differenzen berechnet. Aus der Serie der Differenzwerte einer Abfolge wird die Standardabweichung bestimmt und überprüft, ob diese unter einem bestimmten Schwellwert (z.B. 20 ms) liegt. Wenn diese Bedingung erfüllt ist, wird der Mittelwert der Differenzen der Abfolge als Verzögerung gespeichert.

## Patentansprüche

1. Vorrichtung zur Maschinenüberwachung (1) aufweisend zumindest eine Kamera (3) zur Erfassung von Bilddaten im Bereich einer Maschine (100), eine Steuereinheit (5) zur Ansteuerung der Komponenten der Vorrichtung (1), eine Auswerteeinheit (6) zur Auswertung der mithilfe der mindestens einen Kamera (3) erfassten Bilddaten, eine Speichereinheit (7) zur Speicherung und/oder Zwischenspeicherung der mithilfe der mindestens einen Kamera (3) erfassten Bilddaten und ein Netzwerkmodul (8) zur Verbindung der mindestens einen Kamera (3) zumindest mit der Steuereinheit (5) und der Auswerteeinheit (6), wobei zumindest eine Kamera (3) als eine Trigger-Kamera (3a) ausgebildet ist, sodass die Speicherung und/oder Auswertung der mit der mindestens einen Kamera (3) erfassten Bilddaten in Abhängigkeit der Detektion eines Trigger-Ereignisses auf einen relevanten Zeitbereich im Sinne eines in Abhängigkeit des Zeitpunkts des Trigger-Ereignisses definierten Zeitfensters begrenzbar ist, wobei die mindestens eine Kamera (3) zur kontinuierlichen Aufnahme von Videosequenzen einer vorbestimmten Länge ausgebildet ist, wobei die Videosequenzen mithilfe des Netzwerkmoduls (8) an die Steuereinheit (5) und die Auswerteeinheit (6) übertragbar sind, **dadurch gekennzeichnet, dass** die Auswerteinheit (6) ausgebildet ist, die Videosequenzen der Trigger-Kamera (3a) auf das Vorliegen eines Trigger-Ereignisses im Sinne einer Störung der überwachten Maschine (100) hin auszuwerten, wobei die Steuereinheit (2) der Vorrichtung zur Maschinenüberwachung (1) ausgebildet ist, nur bei einem Vorliegen eines Trigger-Ereignisses in einer Videosequenz der Trigger-Kamera (3a) über das Netzwerkmodul (8) eine vordefinierte Anzahl an Videosequenzen der mindestens einen Kamera (3) von dieser abzurufen und die mindestens eine abgerufene Videosequenz für die Auswerteeinheit (6) zur Auswertung und/oder zur Speicherung der mindestens einen Videosequenz in der Speichereinheit (7) zur Verfügung zu stellen.

2. Vorrichtung zur Maschinenüberwachung (1) nach Anspruch 1, **dadurch gekennzeichnet, dass** die Steuereinheit (5), die Auswerteeinheit (6) sowie der Speichereinheit (7) in einer Zentraleinheit (2) angeordnet sind, die mithilfe des Netzwerkmoduls (8) mit der mindestens einen Kamera (3) verbunden ist.

3. Vorrichtung zur Maschinenüberwachung (1) nach einem der Ansprüche 1 bis 2, **dadurch gekennzeichnet, dass** die Auswerteeinheit (6) einen Farbfilter aufweist, der auf die mithilfe der mindestens einen Kamera (3) erfassten Bilddaten anwendbar ist, sodass aus den erfassten Bilddaten zur Auswertung ein bearbeiteter Satz Bilddaten erzeugbar ist, der nur einen definierten begrenzten Farbbereich aufweist.

4. Vorrichtung zur Maschinenüberwachung (1) nach einem der Ansprüche 1 bis 3, **dadurch gekennzeichnet, dass** diese mindestens zwei Kameras (3) aufweist, wobei die mit den Kameras (3) erfassten Bilddaten miteinander zeitlich synchronisierbar sind.

5. Vorrichtung zur Maschinenüberwachung (1) nach einem der Ansprüche 1 bis 4, **dadurch gekennzeichnet, dass** diese ein Internetmodul aufweist, mit dem die Vorrichtung (1) derart mit dem Internet verbindbar ist, dass die erfassten Bilddaten auf einen Web-Server in die Cloud (11) hochladbar sind und/oder ein Fernzugriff auf die Bilddaten von einer Fernzugriffsstation (12) aus ermöglicht ist.

6. Verfahren zur Maschinenüberwachung, wobei eine Maschine (100) oder Anlage mit mindestens einer Kamera (3) überwacht wird, indem mit der mindestens einen Kamera (3) Bilddaten eines Bereichs der Maschine (100) oder Anlage aufgenommen werden, wobei mindestens eine Kamera als eine Trigger-Kamera (3a) konfiguriert ist, wobei die Trigger-Kamera (3a) kontinuierlich Bilddaten aufnimmt, diese Bilddaten auf das Vorliegen eines definierten Trigger-Ereignisses im Sinne einer Störung der überwachten Maschine (100) hin ausgewertet werden und die Bilddaten der mindestens einen Kamera (3) nur bei der Detektion eines Trigger-Ereignisses in vorbestimmter Art und Weise zeitlich begrenzt zur Auswertung gespeichert und/oder unmittelbar zur Verfügung gestellt werden, **dadurch gekennzeichnet, dass** die mindestens eine Kamera (3) kontinuierlich Videosequenzen einer vorbestimmten Länge aufnimmt, dass die mit der Trigger-Kamera (3a) aufgenommenen Videosequenzen kontinuierlich auf das Vorliegen eines Trigger-Ereignisses hin ausgewertet werden und dass die zeitliche Begrenzung der mithilfe der mindestens einen Kamera (3) erfassten Bilddaten bei Vorliegen eines Trigger-Ereignisses in einer mithilfe der Trigger-Kamera (3a) erfassten Videosequenz durch das Abrufen und Abspeichern nur einer beschränkten vordefinierten Anzahl mithilfe der mindestens einen Kamera (3) erfasster Videosequenzen realisiert ist.

7. Verfahren zur Maschinenüberwachung nach Anspruch 6, **dadurch gekennzeichnet, dass** die mithilfe mindestens einer Kamera (3) erfassten Bilddaten mithilfe eines Farbfilters derart bearbeitet werden, dass der mithilfe des Farbfilters bearbeitete Bilddatensatz nur einen definierten begrenzten Farbbereich aufweist.

8. Verfahren zur Maschinenüberwachung nach einem der Ansprüche 6 und 7, **dadurch gekennzeichnet, dass** mithilfe von mindestens zwei Kameras (3) eine kontinuierliche Erfassung von Bilddaten erfolgt, wobei die mithilfe der Kameras (3) erfassten Bilddaten zeitlich zueinander synchronisiert werden.

9. Verfahren zur Maschinenüberwachung nach Anspruch 8, wobei die mindestens zwei Kameras (3) und die Zentraleinheit (2) oder das Netzwerkmodul (8) jeweils eine lokale Uhr aufweisen und wobei mit den mindestens zwei Kameras (3) erfasste Bilddaten mit einem Zeitstempel der jeweiligen lokalen Uhr versehen werden, **dadurch gekennzeichnet, dass** die zeitliche Synchronisierung der Bilddaten verschiedener Kameras (3) erfolgt, indem die lokalen Zeiten der Kameras (3) abgerufen werden, die Differenz der lokalen Zeiten der Kameras (3) mit der lokalen Zeit einer Zentraleinheit (2) oder eines Netzwerkmoduls (8) bestimmt werden und aus den Differenzen der lokalen Zeiten jeweils einer Kamera (3) und der Zentraleinheit (2) oder des Netzwerkmoduls (8) die Differenz der lokalen Zeiten der Kameras (3) bestimmt wird, und die mithilfe der Kameras (3) erfassten Bilddaten in Verbindung mit dem jeweiligen Zeitstempel entsprechend der Differenz der lokalen Zeiten zeitlich zueinander verschoben werden.

10. Verfahren zur Maschinenüberwachung nach einem der Ansprüche 6 bis 9, **dadurch gekennzeichnet, dass** ein visuelles und/oder ein akustisches Erkennen von Fehlern oder eine Qualitätskontrolle in einer mit dem Verfahren überwachten zyklischen Teilprozess oder Prozess durch einen Master-Frame-Vergleich durchgeführt wird, wobei eine Sequenz der einem Zyklus des zyklischen Teilprozesses oder Prozesses entsprechenden Sensormessdaten aufgenommen wird, aus dieser Sequenz ein Master-Frame definiert wird und anschließend die in jedem Zyklus des Teilprozesses oder Prozesses erfassten Sensormessdaten an jedem Datenerfassungszeitpunkt mit dem Master-Frame verglichen werden und wobei ein Zyklus als fehlerfrei angenommen wird, wenn eine hinreichende Übereinstimmung mit dem Master-Frame in mindestens einem Datenerfassungszeitpunkt festgestellt wird und wobei der Zyklus ansonsten als fehlerbehaftet angenommen wird.

11. Verfahren zur Maschinenüberwachung nach Anspruch 10, **dadurch gekennzeichnet, dass** die hinreichende Übereinstimmung der Sensormesswerte mit dem Master-Frame an einem Datenerfassungszeitpunkt durch die Bestimmung des Ähnlichkeitswertes der Sensormesswerte mit dem Master-Frame und dem Vergleich des Ähnlichkeitswertes mit einem vordefinierten Schwellwert erfolgt, wobei eine hinreichende Ähnlichkeit dann besteht, wenn der Ähnlichkeitswert über dem Schwellwert liegt.

12. Verfahren zur Maschinenüberwachung nach einem der Ansprüche 6 bis 11, **dadurch gekennzeichnet, dass** die bei der Detektion eines Trigger-Ereignisses mithilfe der mindestens einen Kamera (3) erfassten und ausgewählten Bilddaten als einzelne Videosequenzen oder gerendert zu einem einzigen Video in einem Datenpaket auf einen Webserver in die Cloud (11) hochgeladen werden und/oder ein internetbasierter Fernzugriff auf diese Daten bereitgestellt wird.

13. Verfahren zur Maschinenüberwachung nach einem der Ansprüche 6 bis 12, **dadurch gekennzeichnet, dass** eine Vorrichtung zur Maschinenüberwachung (1) nach einem der Ansprüche 1 bis 6 verwendet wird.

14. Computerprogrammprodukt zur Maschinenüberwachung umfassend Programmbefehle die bei der Ausführung auf einem Computer diesen veranlassen, das Verfahren zur Maschinenüberwachung nach einem der Ansprüche 6 bis 13 auszuführen.

15. Computerprogrammprodukt zur Maschinenüberwachung nach Anspruch 14, **dadurch gekennzeichnet, dass** dieses mindestens zwei Softwaremodule aufweist, wobei mindestens ein erstes Softwaremodul des Computerprogrammprodukts zur Installation und Ausführung auf mindestens einer Kamera (3) und mindestens ein zweites Softwaremodul des Computerprogrammprodukts zur Installation und Ausführung auf einer Zentraleinheit (2) und/oder einem Netzwerkmodul (8) ausgebildet ist

## Claims

1. Device for machine monitoring (1) comprising at least one camera (3) for capturing image data in the area of a machine (100), a control unit (5) for controlling the components of the device (1), an evaluation unit (6) for evaluating the image data captured with the aid of the at least one camera (3), a storage unit (7) for storing and/or temporarily storing the image data captured with the aid of the at least one camera (3) and a network module (8) for connecting the at least one camera (3) at least to the control unit (5) and the evaluation unit (6), wherein at least one camera (3) is designed as a trigger camera (3a), so that the storage and/or evaluation of the image data captured by the at least one camera (3) can be limited to a relevant time range in the sense of a time window defined as a function of the time of the trigger event, wherein the at least one camera (3) is designed to continuously record video sequences of a predetermined length, wherein the video sequences can be transmitted to the control unit (5) and the evaluation unit (6) by means of the network module (8), **characterized in that** the evaluation unit (6) is designed to evaluate the video sequences of the trigger camera (3a) for the presence of a trigger event in the sense of a malfunction of the monitored machine (100), wherein the control unit (2) of the device for machine monitoring (1) is designed to retrieve a predefined number of video sequences from the at least one camera (3) via the network module (8) only when a trigger event is present in a video sequence of the trigger camera (3a) and to make the at least one retrieved video sequence available to the evaluation unit (6) for evaluation and/or for storage of the at least one video sequence in the storage unit (7).

2. Device for machine monitoring (1) according to claim 1, **characterized in that** the control unit (5), the evaluation unit (6) and the storage unit (7) are arranged in a central unit (2) which is connected to the at least one camera (3) by means of the network module (8).

3. Device for machine monitoring (1) according to one of the claims 1 to 2, **characterized in that** the evaluation unit (6) has a color filter which can be applied to the image data captured with the aid of the at least one camera (3), so that a processed set of image data which has only a defined limited color range can be generated from the captured image data for evaluation.

4. Device for machine monitoring (1) according to one of the claims 1 to 3, **characterized in that** it has at least two cameras (3), wherein the image data captured by the cameras (3) can be synchronized with each other in time.

5. Device for machine monitoring (1) according to one of the claims 1 to 4, **characterized in that** it has an internet module with which the device (1) can be connected to the internet in such a way that the captured image data can be uploaded to a web server in the cloud (11) and/or remote access to the image data from a remote access station (12) is enabled.

6. Method for machine monitoring, wherein a machine (100) or facility is monitored with at least one camera (3), in that image data of an area of the machine (100) or facility is recorded with the at least one camera (3), wherein at least one camera is configured as a trigger camera (3a), wherein the trigger camera (3a) continuously records image data, this image data is evaluated for the presence of a defined trigger event in the sense of a malfunction of the monitored machine (100), and the image data of the at least one camera (3) is stored for evaluation in a predetermined manner for a limited time only when a trigger event is detected and/or is made available immediately, **characterized in that** the at least one camera (3) continuously records video sequences of a predetermined length, **in that** the video sequences recorded with the trigger camera (3a) are continuously evaluated for the presence of a trigger event, and **in that** the temporal limitation of the image data recorded with the aid of the at least one camera (3) in the presence of a trigger event in a video sequence recorded with the aid of the trigger camera (3a) is realized by retrieving and storing only a limited predefined number of video sequences recorded with the aid of the at least one camera (3).

7. Method for machine monitoring according to claim 6, **characterized in that** the image data captured with the aid of at least one camera (3) are processed with the aid of a color filter in such a way that the image data set processed with the aid of the color filter has only a defined limited color range.

8. Method for machine monitoring according to one of the claims 6 and 7, **characterized in that** image data are continuously captured with the aid of at least two cameras (3), wherein the image data captured with the aid of the cameras (3) are synchronized in time with one another.

9. Method for machine monitoring according to claim 8, wherein the at least two cameras (3) and the central unit (2) or the network module (8) each have a local clock and wherein image data captured with the at least two cameras (3) are provided with a time stamp of the respective local clock, **characterized in that** the time synchronization of the image data of different cameras (3) is carried out by retrieving the local times of the cameras (3), the difference between the local times of the cameras (3) and the local time of a central unit (2) or a network module (8) is determined and the difference between the local times of the cameras (3) is determined from the differences between the local times of a camera (3) and the central unit (2) or the network module (8), and the image data captured with the aid of the cameras (3) is shifted in time relative to one another in conjunction with the respective time stamp in accordance with the difference between the local times.

10. Method for machine monitoring according to one of the claims 6 to 9, **characterized in that** a visual and/or an acoustic detection of faults or a quality control in a cyclic sub-process or process monitored by the method is carried out by a master-frame comparison, wherein a sequence of the sensor measurement data corresponding to a cycle of the cyclic sub-process or process is recorded, a master frame is defined from this sequence and the sensor measurement data recorded in each cycle of the sub-process or process is then compared with the master frame at each data acquisition point in time, and a cycle is assumed to be free of errors if a sufficient match with the master frame is established in at least one data acquisition point in time and the cycle is otherwise assumed to be subject to errors.

11. Method for machine monitoring according to claim 10, **characterized in that** the sufficient correspondence of the sensor measured values with the master frame at a data acquisition time is carried out by determining the similarity value of the sensor measured values with the master frame and comparing the similarity value with a predefined threshold value, wherein a sufficient similarity exists if the similarity value is above the threshold value.

12. Method for machine monitoring according to one of the claims 6 to 11, **characterized in that** the image data captured and selected during the detection of a trigger event using the at least one camera (3) are uploaded as individual video sequences or rendered into a single video in a data package to a web server in the cloud (11) and/or internet-based remote access to these data is provided.

13. Method for machine monitoring according to one of the claims 6 to 12, **characterized in that** a device for machine monitoring (1) according to one of the claims 1 to 6 is used.

14. A computer program product for machine monitoring comprising program instructions which, when executed on a computer, cause the computer to execute the machine monitoring method according to any one of the claims 6 to 13.

15. Computer program product for machine monitoring according to claim 14, **characterized in that** it has at least two software modules, at least one first software module of the computer program product being designed for installation and execution on at least one camera (3) and at least one second software module of the computer program product being designed for installation and execution on a central processing unit (2) and/or a network module (8)

## Revendications

1. Dispositif de surveillance de machines (1) comprenant au moins une caméra (3) pour acquérir des données d'image dans la zone d'une machine (100), une unité de commande (5) pour commander les composants du dispositif (1), une unité d'évaluation (6) pour évaluer les données d'image acquises à l'aide de l'au moins une caméra (3), une unité de stockage (7) pour le stockage et/ou le stockage temporaire des données d'image acquises à l'aide de l'au moins une caméra (3) et un module de réseau (8) pour connecter l'au moins une caméra (3) au moins à l'unité de commande (5) et à l'unité d'évaluation (6), au moins une caméra (3) étant conçue sous la forme d'une caméra à déclencheur (3a), de sorte que le stockage et/ou l'évaluation des données d'image acquises avec l'au moins une caméra (3) peut être limitée, en fonction de la détection d'un événement déclencheur, à un domaine temporel pertinent au sens d'une fenêtre temporelle définie en fonction du moment de l'événement déclencheur, l'au moins une caméra (3) étant conçue pour l'enregistrement continu de séquences vidéo ayant une longueur prédéterminée, les séquences vidéo pouvant être transmises à l'unité de commande (5) et à l'unité d'évaluation (6) à l'aide du module de réseau (8), **caractérisé en ce que** l'unité d'évaluation (6) est conçue pour évaluer les séquences vidéo de la caméra à déclencheur (3a) afin de déterminer la présence d'un événement déclencheur au sens d'un défaut de la machine surveillée (100), l'unité de commande (2) du dispositif de surveillance de machines (1) étant conçue pour, uniquement en cas de présence d'un événement déclencheur dans une séquence vidéo de la caméra à déclencheur (3a), récupérer par l'intermédiaire du module de réseau (8) un nombre prédéfini de séquences vidéo de l'au moins une caméra (3) à partir de celle-ci et mettre l'au moins une séquence vidéo récupérée à la disposition de l'unité d'évaluation (6) pour l'évaluation et/ou pour le stockage de l'au moins une séquence vidéo dans l'unité de stockage (7).

2. Dispositif de surveillance de machines (1) selon la revendication 1, **caractérisé en ce que** l'unité de commande (5), l'unité d'évaluation (6) ainsi que l'unité de stockage (7) sont disposées dans une unité centrale (2) qui est connectée à l'au moins une caméra (3) à l'aide du module de réseau (8).

3. Dispositif de surveillance de machines (1) selon l'une des revendications 1 à 2, **caractérisé en ce que** l'unité d'évaluation (6) comprend un filtre coloré qui peut être appliqué aux données d'image acquises à l'aide de l'au moins une caméra (3), de sorte qu'un ensemble traité de données d'image, qui ne présente qu'une plage de couleurs limitée définie, peut être généré à partir des données d'image acquises pour l'évaluation.

4. Dispositif de surveillance de machines (1) selon l'une des revendications 1 à 3, **caractérisé en ce qu'**il comprend au moins deux caméras (3), les données d'image acquises au moyen des caméras (3) pouvant être synchronisées temporellement entre elles.

5. Dispositif de surveillance de machines (1) selon l'une des revendications 1 à 4, **caractérisé en ce qu'**il comprend un module Internet au moyen duquel le dispositif (1) peut être connecté à Internet de telle sorte que les données d'image acquises peuvent être téléchargées sur un serveur web en nuage (11) et/ou qu'un accès à distance aux données d'image à partir d'une station d'accès à distance (12) est rendu possible.

6. Procédé de surveillance de machines, dans lequel une machine (100) ou une installation est surveillée au moyen d'au moins une caméra (3), en enregistrant des données d'image d'une zone de la machine (100) ou de l'installation au moyen de l'au moins une caméra (3), au moins une caméra étant configurée sous la forme d'une caméra à déclencheur (3a), la caméra à déclencheur (3a) enregistrant en continu des données d'image, ces données d'image étant évaluées afin de déterminer la présence d'un événement déclencheur défini au sens d'un défaut de la machine surveillée (100), et les données d'image de l'au moins une caméra (3) n'étant stockées pour l'évaluation et/ou mises directement à disposition de manière limitée dans le temps d'une manière prédéterminée qu'en cas de détection d'un événement déclencheur, **caractérisé en ce que** l'au moins une caméra (3) enregistre en continu des séquences vidéo ayant une longueur prédéterminée, **en ce que** les séquences vidéo enregistrées au moyen de la caméra à déclencheur (3a) sont évaluées en continu afin de déterminer la présence d'un événement déclencheur, et **en ce que** la limitation temporelle des données d'image acquises à l'aide de l'au moins une caméra (3) en cas de présence d'un événement déclencheur dans une séquence vidéo acquise à l'aide de la caméra à déclencheur (3a) est réalisée par la récupération et le stockage d'un nombre limité prédéfini de séquences vidéo acquises à l'aide de l'au moins une caméra (3).

7. Procédé de surveillance de machines selon la revendication 6, **caractérisé en ce que** les données d'image acquises à l'aide d'au moins une caméra (3) sont traitées à l'aide d'un filtre coloré de telle sorte que l'ensemble de données d'image traité à l'aide du filtre coloré ne présente qu'une plage de couleurs limitée définie.

8. Procédé de surveillance de machines selon l'une des revendications 6 et 7, **caractérisé en ce qu'**une acquisition continue de données d'image est effectué à l'aide d'au moins deux caméras (3), les données d'image acquises à l'aide des caméras (3) étant synchronisées temporellement les unes par rapport aux autres.

9. Procédé de surveillance de machines selon la revendication 8, dans lequel les au moins deux caméras (3) et l'unité centrale (2) ou le module de réseau (8) comprennent respectivement une horloge locale et dans lequel les données d'image acquises au moyen des au moins deux caméras (3) sont pourvues d'un horodatage de l'horloge locale respective, **caractérisé en ce que** la synchronisation temporelle des données d'image de différentes caméras (3) est effectuée en récupérant les temps locaux des caméras (3), en déterminant la différence entre les temps locaux des caméras (3) et le temps local d'une unité centrale (2) ou d'un module de réseau (8), et en déterminant la différence des temps locaux des caméras (3) à partir des différences des temps locaux de chaque caméra (3) et de l'unité centrale (2) ou du module de réseau (8), et les données d'image acquises à l'aide des caméras (3) sont décalées temporellement les unes par rapport aux autres en lien avec l'horodatage respectif en fonction de la différence des temps locaux.

10. Procédé de surveillance de machines selon l'une des revendications 6 à 9, **caractérisé en ce qu'**une reconnaissance visuelle et/ou acoustique de défauts ou un contrôle de qualité lors d'un sous-processus ou d'un processus cyclique surveillé au moyen du procédé est effectué par une comparaison à une trame maître, une séquence des données de mesure de capteur qui correspond à un cycle du sous-processus ou du processus cyclique étant enregistrée, une trame maître étant définie à partir de cette séquence, et les données de mesure de capteur acquises lors de chaque cycle du sous-processus ou du processus étant ensuite comparées à la trame maître en chaque point d'acquisition de données, et un cycle étant considéré comme étant exempt de défaut si une concordance suffisante avec la trame maître est constatée en au moins un point d'acquisition de données, et le cycle étant considéré comme étant défectueux dans les autres cas.

11. Procédé de surveillance de machines selon la revendication 10, **caractérisé en ce que** la concordance suffisante des valeurs de mesure de capteur avec la trame maître en un point d'acquisition de données est effectuée par détermination de la valeur de ressemblance des valeurs de mesure de capteur avec l'image maître et en comparant la valeur de ressemblance à une valeur de seuil prédéfinie, une ressemblance suffisante existant lorsque la valeur de ressemblance est supérieure à la valeur de seuil.

12. Procédé de surveillance de machines selon l'une des revendications 6 à 11, **caractérisé en ce que**, lors de la détection d'un événement déclencheur à l'aide de l'au moins une caméra (3), les données d'image acquises et sélectionnées sont téléchargées sous forme de séquences vidéo individuelles ou soumises à un rendu en une vidéo unique dans un paquet de données sur un serveur web en nuage (11) et/ou **en ce qu'**un accès à distance basé sur Internet à ces données est assuré.

13. Procédé de surveillance de machines selon l'une des revendications 6 à 12, **caractérisé en ce qu'**un dispositif de surveillance de machines (1) selon l'une des revendications 1 à 6 est utilisé.

14. Produit programme informatique pour la surveillance de machines comprenant des instructions de programme qui, lors de leur exécution sur un ordinateur, amènent celui-ci à mettre en œuvre le procédé de surveillance de machines selon l'une des revendications 6 à 13.

15. Produit programme informatique pour la surveillance de machines selon la revendication 14, **caractérisé en ce qu'**il comprend au moins deux modules logiciels, au moins un premier module logiciel du produit programme informatique étant conçu pour être installé et exécuté sur au moins une caméra (3) et au moins un second module logiciel du produit-programme informatique étant conçu pour être installé et exécuté sur une unité centrale (2) et/ou un module de réseau (8).
